# EUROPEAN PATENT APPLICATION

(11) **EP 4 520 989 A1**
(43) Date of publication of application: **12.03.2025**
(21) Application number: 24197319.7
(22) Date of filing: 29.08.2024
(51) Int. Cl.: F16D 11/14, F16D 27/118

(54) **DISCONNECT MODULE, POWER TRANSMISSION SYSTEM FOR VEHICLE, AND VEHICLE**

(30) Priority: 01.09.2023 CN 202311126525; 01.09.2023 CN 202322380965 U
(71) Applicant: VALEO EMBRAYAGES, 80009 Amiens (FR)
(72) Inventor: HU, Xun, 80009 AMIENS Cedex 2 (FR); LI, Lu, 80009 AMIENS Cedex 2 (FR); LI, Chun, 80009 AMIENS Cedex 2 (FR); SHI, Lei, 80009 AMIENS Cedex 2 (FR); HAN, Yefei, 80009 AMIENS Cedex 2 (FR)
(74) Representative: Valeo Powertrain Systems

(57) **Abstract**

The present invention relates to a disconnect module (10) for engaging or disengaging a first component (20) rotatable about a first shaft (30) with or from the first shaft, the disconnect module comprising: a clutch member (12), mounted on the first shaft in a rotatably fixed manner; a drive member (11), arranged between the first component and the clutch member in an axial direction, and fixedly connected to the first component, wherein the clutch member is able to reciprocate axially to engage with and disengage from the drive member, the first shaft rotates together with the first component in an engaged state, and the first shaft is independent of the first component in a disengaged state. The present invention further relates to a power transmission system for a vehicle, comprising the disconnection mechanism, and further relates to a vehicle comprising the power transmission system.

## Description

### TECHNICAL FIELD

The present invention relates to a disconnect module for engaging or disengaging a first component rotatable about a first shaft with or from the first shaft. The present invention further relates to a power transmission system for a vehicle, which comprises the disconnect module. In addition, the present invention also relates to a vehicle, which comprises the power transmission system.

### BACKGROUND OF THE INVENTION

The trend of designing and manufacturing fuel-efficient, low-emission vehicles has grown considerably. This trend is the inevitable result of concern for the environment and increased fuel costs. At the forefront of this trend is the development of electric vehicles, such as pure electric vehicles, hybrid vehicles, plug-in hybrid vehicles, range extended electric vehicles and fuel cell vehicles.

Four-wheel drive electric vehicles are equipped with motors at both the front and the rear, and these are usually classed as a main drive motor and an auxiliary drive motor; in some situations, the auxiliary drive motor may be in a non-operational state. For example, the auxiliary drive motor is only brought into use during acceleration or in special operating conditions, or when the driver requires certain high-performance modes. However, when the auxiliary drive motor stops running, the wheels will still drive an auxiliary drive differential to operate, and the differential will drive all transmission mechanisms and motors connected thereto to rotate together, thereby generating drag loss. To improve efficiency, a disconnection mechanism is added to a power transmission system of the electric vehicle, thereby reducing drag loss.

A conventional disconnection mechanism, for example, only uses a splined connection to disconnect an idler gear supported on a transmission shaft. An axial protruding end with splines is constructed on an inner side of the idler gear close to the transmission shaft. Generally, a shift fork is used to drive a clutch to reciprocate linearly in the axial direction, so as to engage with and disengage from the splines. However, unfavorably, due to the spatial position of such a splined connection and the meshing length that it requires, the disconnection mechanism and the entire power transmission system usually require a large axial space.

### SUMMARY OF THE INVENTION

The technical problem to be solved by the present invention is to overcome the defects or shortcomings of the prior art mentioned above, and the present invention provides a disconnect module which is capable of reducing the axial length of the entire assembly and also easy to assemble.

This technical problem is solved by the following technical solution.

According to an aspect of the present invention, a disconnect module is provided, for engaging or disengaging a first component rotatable about a first shaft with or from the first shaft, the disconnect module comprising:
a clutch member, mounted on the first shaft in a rotatably fixed manner;
a drive member, arranged between the first component and the clutch member in an axial direction, and fixedly connected to the first component;
wherein the clutch member is able to reciprocate axially to engage with and disengage from the drive member, the first shaft rotates together with the first component in an engaged state, and the first shaft is independent of the first component in a disengaged state.

The present invention splits a conventional clutch into two members, namely the drive member and the clutch member, wherein the drive member is fixedly connected to the first component, and the clutch member is configured to be able to engage with and disengage from the drive member, so that the drive member is used to transmit a driving force from the first component. Since the drive member is tightly connected to the first component in space, full use is made of axial space which is idle in an existing apparatus, so the axial length of the entire assembly is advantageously reduced.

In an exemplary embodiment, the drive member is provided with a first connecting portion on a side facing the first component, the connecting portion being able to mesh with a corresponding connecting portion provided on the first component, so as to fixedly connect the drive member to the first component.

In an exemplary embodiment, the first connecting portion is a transmission pin, and the corresponding connecting portion is an opening.

In an exemplary embodiment, the transmission pin is multiple transmission pins distributed uniformly in a circumferential direction.

In an exemplary embodiment, the drive member has a first engagement portion, and the clutch member has a second engagement portion, the first engagement portion being able to mesh with the second engagement portion.

In an exemplary embodiment, the first engagement portion and the second engagement portion are both configured as end surface teeth.

In an exemplary embodiment, the disconnect module comprises a bearing, the drive member being supported on the first shaft by means of the bearing.

In an exemplary embodiment, the disconnect module comprises a first snap ring arranged on the drive member, the first snap ring abutting a side of an outer ring of the bearing that faces the first component.

In an exemplary embodiment, the disconnect module comprises a return mechanism, for applying pressure to the clutch member in a direction towards a position of disengagement from the drive member.

In an exemplary embodiment, the return mechanism has one end in abutment with an inner ring of the bearing and another end in abutment with the clutch member.

In an exemplary embodiment, the return assembly is a disc spring.

In an exemplary embodiment, the disconnect module comprises an electromagnetic actuator comprising an armature, the armature being able to apply an axial action force to the clutch member to cause the clutch member to engage with the drive member.

In an exemplary embodiment, the disconnect module comprises a second snap ring, located on a side of the electromagnetic actuator that is remote from the clutch member and configured to stop the electromagnetic actuator in the axial direction.

In an exemplary embodiment, the first component is an idler gear in a speed reducer, and the drive member is fixedly connected to an end surface of the idler gear.

According to another aspect of the present invention, a power transmission system for a vehicle is provided, comprising: a motor having a drive shaft; a speed reducer having at least one transmission shaft; and the disconnect module described above, wherein the first shaft comprises the drive shaft or the at least one transmission shaft.

According to another aspect of the present invention, provision is made for a vehicle, comprising the transmission system described previously.

With reference to the following description, these and other features, aspects and advantages of the present invention will become easier to understand. The accompanying drawings incorporated in this specification and constituting a part thereof illustrate embodiments of the present application, and are used to explain the principles of the present application together with the description.

### BRIEF DESCRIPTION OF THE DRAWINGS

The accompanying drawings are incorporated into and constitute a part of the specification. The accompanying drawings, together with the general description above and the detailed description of exemplary embodiments and methods given below, are used to explain the principles of the present invention. The objects and advantages of the present invention will become apparent when studying the following description according to the accompanying drawings, in which identical elements are given identical or similar reference signs, and in which:
Fig. 1 shows a partial schematic drawing of an exemplary embodiment of a disconnect module according to the present invention.
Fig. 2 shows an exploded schematic drawing of the disconnect module according to the present invention in Fig. 1.
Fig. 3 shows a partial schematic installation drawing of the disconnect module according to the present invention.

### DETAILED DESCRIPTION

Reference will now be made in detail to exemplary embodiments and methods of the present invention shown in the accompanying drawings, in which identical reference signs designate identical or corresponding components. However, it should be noted that the present invention in its broader aspects is not limited to specific details, representative devices and methods, and illustrative examples shown and described in connection with the exemplary embodiments and methods.

Unless otherwise defined, the technical or scientific terms used herein shall have the common meanings understood by those of ordinary skill in the field to which the present invention pertains. The words "first", "second", and the like used in the description and claims of the patent application disclosed herein do not indicate any order, quantity or importance, being merely used to distinguish different component parts. When the number of components is not specified, the number of components may be one or multiple. Similarly, the words "one", "the", "said" and the like do not necessarily indicate a quantity limitation. The words "comprise", "include" and the like mean that an element or object appearing before the word encompasses elements or objects listed after the word and their equivalents, without excluding other elements or objects. "Upper", "lower", "left", "right", etc. are only intended to indicate the relative orientation relationship when a device is used or the orientation relationship shown in the accompanying drawings. When the absolute position of the described object changes, the relative positional relationship may also change accordingly. Unless otherwise explicitly described, the terms "connecting", "connected" and the like refer to a relationship in which the structures are fixed or attached to each other directly or indirectly through an intermediate structure.

Now refer to the accompanying drawings, in which identical numerals represent identical elements in all of the accompanying drawings.

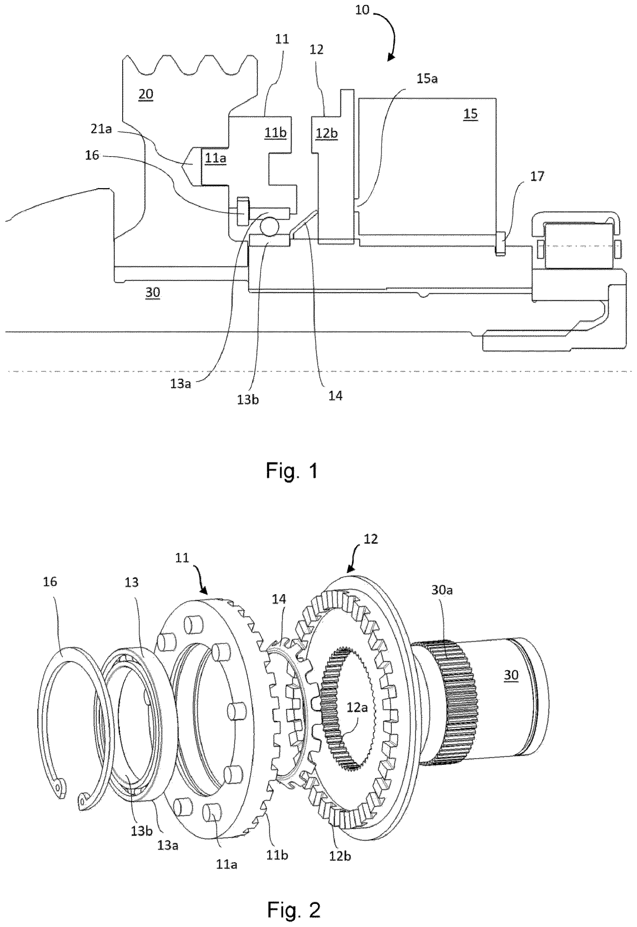

Fig. 1 shows a partial schematic drawing of an exemplary embodiment of a disconnect module 10 according to the present invention. Fig. 2 shows an exploded schematic drawing of the disconnect module 10 according to the present invention in Fig. 1. By referring to Figs. 1 and 2, a better understanding can be gained of the component parts and application scenarios of the disconnect module 10 of the present invention.

The disconnect module 10 according to the present invention is used for engaging a first component 20 with a first shaft 30 or disengaging the first component 20 from the first shaft 30, the first component 20 being rotatable about the first shaft 30. The first shaft 30 shown comprises the drive shaft and the at least one transmission shaft. The first component 20 is a gear supported on the first shaft.

The disconnect module 10 comprises: a clutch member 12, mounted on the first shaft 30 in a rotatably fixed manner; and a drive member 11, axially arranged between the first component 20 and the clutch member 12, and fixedly connected to the first component 20, wherein the clutch member 12 can reciprocate axially to engage with and disengage from the drive member 11; the first shaft 30 rotates together with the first component 20 in an engaged state, and the first shaft 30 is independent of the first component 20 in a disengaged state.

It should be noted that "rotatably fixed" described herein means that two components can be connected to rotate together, and their mutual movement in a rotation direction (such as a circumferential direction) is restricted so that they can rotate together. The "rotatably fixed" does not restrict the displacement in a rotation axis direction, so the two rotatably fixed components may have relative displacement in the rotation axis direction. If the displacement in the rotation axis direction is also fixed, it can be considered that the two components are completely fixedly connected. In this exemplary embodiment, the clutch member 12 and the first shaft 30 are rotatably fixed by means of a splined connection; specifically, first splines 30a are provided on the first shaft 30, and second splines 12a cooperating with the first splines 30a are provided on the clutch member 12; and the drive member 11 is fixedly connected to the first component 20.

It should be noted here that the first shaft 30 being independent of the first component 20 in the disengaged state means that the motion state of the first shaft 30 is independent of the motion state of the first component 20 at this time. That is, the first shaft 30 and the first component 20 can rotate independently of each other, but it does not mean that there is no connection between them.

The disconnect module 10 of the present invention splits a conventional clutch into two members, namely the drive member 11 and the clutch member 12, wherein the drive member 11 is fixedly connected to the first component 20, and the clutch member 12 is configured to be able to engage with and disengage from the drive member 11, so that the drive member 11 is used to transmit a driving force from the first component 20. Since the drive member 11 is tightly connected to the first component 20 in space, full use is made of axial space which is idle in an existing apparatus, so compared with a conventional clutch, the axial length of the entire assembly is advantageously reduced.

In this exemplary embodiment, the first component 20 is an idler gear in a speed reducer, and has an end surface 21 facing the drive member 11. The drive member 11 is provided with a plurality of transmission pins 11a evenly distributed along a circumferential direction on the side facing the first component 20, a plurality of openings 21a evenly distributed along the circumferential direction are provided on the end surface of the first component 20 facing the drive member 11, and the transmission pins 11a can mesh with the openings 21a so that the drive member 11 is fixedly connected to the first component 20.

Other connection manners may also be used within the scope of the present invention to achieve a fixed connection between the drive member 11 and the clutch member 12.

In this exemplary embodiment, the drive member 11 has a first engagement portion 11b, the clutch member 2 has a second engagement portion 12b, and the first engagement portion can mesh with the second engagement portion. In this exemplary embodiment, the first engagement portion 11b and the second engagement portion 12b are both configured as end surface teeth.

In another exemplary embodiment of the present invention, the drive member 11 and the clutch member 12 may also be engaged by means of circumferential splines.

In this exemplary embodiment, the disconnect module 10 further comprises a bearing 13, the drive member 11 being supported on the first shaft 30 by means of the bearing 13.

In this exemplary embodiment, the disconnect module 10 further comprises a return mechanism 14 for applying pressure to the clutch member 12 in a direction towards a position of disengagement from the drive member 11, the return mechanism having one end in abutment with an inner ring 13b of the bearing 13 and another end in abutment with the clutch member 12. The return mechanism 14 is shown here as a disc spring, i.e. a Belleville spring. This type of spring has a short axial deformation length, so saves space.

It should be explained that the axial deformation length of a disc spring is more easily matched to the meshing length of the end surface teeth, so that the objective of the present invention is achieved more effectively.

Within the scope of the present invention, other types of return mechanism may also be used to apply pressure to the clutch member 12.

Here, the bearing 13 effectively realizes a connection between the drive member 11 and the clutch member 12. Since the inner ring of the bearing 13 is supported on the first shaft 30, it supports the drive member 11 and also provides support for the disc spring; moreover, the disc spring, as a result of being supported on the inner ring of the bearing 13, does not rotate relative to the clutch member 12, and is therefore able to continuously apply pressure to the clutch member 12 in a direction towards a position of disengagement from the drive member 11.

In this exemplary embodiment, the disconnect module 10 further comprises an electromagnetic actuator 15, which comprises an armature 15a, the armature being able to apply an axial action force to the clutch member 12 to cause the clutch member 12 to engage with the drive member 11.

Here, axial reciprocation of the clutch member 12 is achieved by means of the return mechanism 14 and the electromagnetic actuator 15, wherein the return mechanism 14 is used to provide a force causing disengagement of the clutch member, and the electromagnetic actuator 15 is used to provide a force causing engagement of the clutch member.

In this exemplary embodiment, the disconnect module 10 further comprises: a first snap ring 16 arranged on the drive member 11, the first snap ring abutting a side of an outer ring 13a of the bearing 13 that faces the first component 20.

In this exemplary embodiment, the disconnect module 10 further comprises a second snap ring 17, located on a side of the electromagnetic actuator 15 that is remote from the clutch member 12 and configured to stop the electromagnetic actuator 15 in the axial direction.

In another exemplary embodiment of the present invention, a shoulder may be provided on the first shaft 30 to support the disc spring, and the bearing 13 can thus be eliminated. Furthermore, the bearing 13 could also be a bearing without an inner ring, in which case, a shoulder is also provided on the first shaft to support the return component.

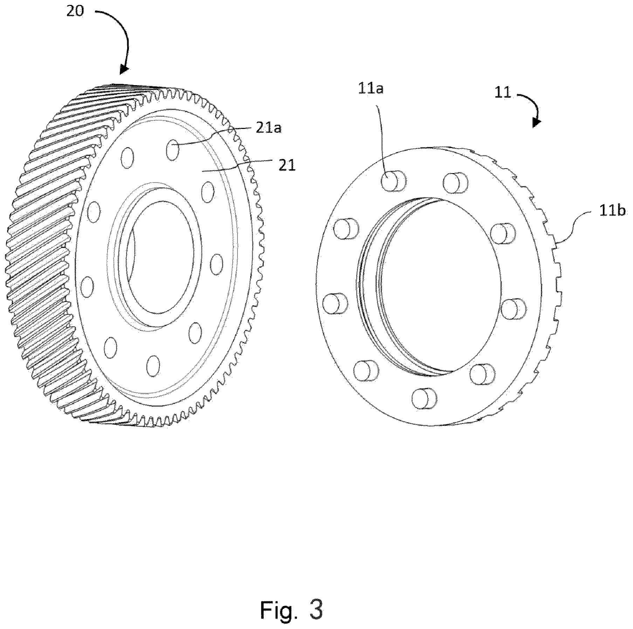

Fig. 3 shows a partial schematic installation drawing of the disconnect module 10 according to the present invention, wherein it can be seen that multiple transmission pins 11a, which are distributed uniformly in the circumferential direction, are provided on the drive member 11 on the side facing the first component 20; the multiple transmission pins 11a are configured to be fitted to multiple openings 21a on the end surface 21 of the first component 20 facing the drive member 11, so as to fixedly connect the drive member 11 to the first component 20. It can also be seen that the drive member 11 is provided with a first engagement portion 11b on the side facing the clutch member 12; here, the first engagement portion is end surface teeth.

In addition to the advantages mentioned above, the disconnect module of the present invention also has the advantage of being modular; each assembly can be packaged and provided as a module, and thus can be fitted directly to an existing power transmission system, thereby reducing time and labor costs.

The power transmission system provided by the present invention includes: a motor (not shown) having a drive shaft; a speed reducer (not shown) having at least one transmission shaft; and a disconnect module 10, wherein the first shaft 30 shown includes the drive shaft and the at least one transmission shaft. The first component 20 is a gear supported on the first shaft.

It should be understood that the power transmission system refers to a device that is driven by electric power. Illustratively, the motor, as a drive mechanism, may convert input electrical energy into rotational mechanical energy, and the speed reducer is mechanically connected to the motor, so that the torque and rotational speed generated by the motor are adjusted and further transmitted to the wheels of the vehicle.

At least one transmission shaft of the speed reducer may include a speed reducer input shaft and an intermediate shaft arranged parallel to each other. The speed reducer input shaft may be provided with an input gear. The input gear may be integrally formed on the speed reducer input shaft and coaxially arranged with the speed reducer input shaft. The intermediate shaft may be provided with an intermediate first gear and an intermediate second gear. The intermediate first gear is drivingly meshed with the input gear. The intermediate second gear may be drivingly meshed with the driven gear connected to the differential. Thus, a two-stage helical gear parallel shaft speed reducer arrangement from the speed reducer input shaft to the differential is realized.

The operation mode of the disconnect module 10 of the present invention in the power transmission system is as follows: when engagement is necessary, the armature 15a is energized and pushes the clutch member 12 to overcome the reaction force of the return mechanism 14, so as to realize engagement with the drive member 11; in this engaged state, driving force/torque from the motor is able to be transmitted via the first shaft 30 to a differential 50 and a wheel connected thereto; conversely, when disengagement is necessary, the armature 15a is de-energized and retracts, the return mechanism 14 pushes the clutch member 12 to disengage from the drive member 11, the transmission of driving force/torque is disconnected, and even if the wheel still drives the auxiliary drive differential to operate, the rotation of the wheel drives as few transmission mechanisms as possible, thereby reducing drag losses.

A vehicle provided by the present invention includes the power transmission system as described previously. The vehicle may be an electrified vehicle, such as a battery electric vehicle (BEV), a hybrid electric vehicle (HEV), a plug-in hybrid electric vehicle (PHEV) or a range-extended electrified vehicle (REEV). The vehicle may also be a hydrogen-powered vehicle. It should be understood that the vehicle of the present invention also has the advantages described above with respect to the disconnect module and the power transmission system.

Although exemplary embodiments are described in the foregoing description, it should be noted that a large number of variants are possible. In addition, it should be noted that the exemplary embodiments are merely examples and should not be considered as any form of limitation on the scope of protection, applicability, and device construction according to the exemplary embodiments. More precisely, the summary and the description of embodiments are to provide professionals with guidance for implementing at least one exemplary embodiment, wherein various modifications can be made in terms of the function and layout of the assembly, as long as they do not deviate from the scope of protection determined by the claims and equivalent feature combinations.

## Claims

1. A disconnect module (10) for engaging or disengaging a first component (20) rotatable about a first shaft (30) with or from the first shaft (30), the disconnect module (10) comprising:
a clutch member (12), mounted on the first shaft (30) in a rotatably fixed manner;
a drive member (11), arranged between the first component (20) and the clutch member (12) in an axial direction, and fixedly connected to the first component (20);
wherein the clutch member (12) is capable of reciprocating axially to engage with and disengage from the drive member (11), the first shaft (30) rotates together with the first component (20) in an engaged state, and the first shaft (30) is independent of the first component (20) in a disengaged state.

2. The disconnect module (10) according to claim 1, wherein the drive member (11) is provided with a first connecting portion on a side facing the first component (20), the connecting portion being capable of meshing with a corresponding connecting portion provided on the first component (20), so as to fixedly connect the drive member (11) to the first component (20).

3. The disconnect module (10) according to claim 2, wherein the first connecting portion is a transmission pin (11a), and the corresponding connecting portion is an opening.

4. The disconnect module (10) according to claim 3, wherein the transmission pin (11a) is multiple transmission pins (11a) distributed uniformly in a circumferential direction.

5. The disconnect module (10) according to claim 1, wherein the drive member (11) has a first engagement portion (1 1b), and the clutch member (12) has a second engagement portion (12b), the first engagement portion being able to mesh with the second engagement portion.

6. The disconnect module (10) according to claim 5, wherein the first engagement portion (11b) and the second engagement portion (12b) are both configured as end surface teeth.

7. The disconnect module (10) according to claim 1, wherein the disconnect module (10) comprises a bearing (13), the drive member (11) being supported on the first shaft (30) by means of the bearing (13).

8. The disconnect module (10) according to claim 7, wherein the disconnect module (10) comprises a first snap ring (16) arranged on the drive member (11), the first snap ring abutting a side of an outer ring (13a) of the bearing (13) that faces the first component (20).

9. The disconnect module (10) according to claim 7, wherein the disconnect module (10) comprises a return mechanism (14), for applying pressure to the clutch member (12) in a direction towards a position of disengagement from the drive member (11).

10. The disconnect module (10) according to claim 9, wherein the return mechanism (14) has one end in abutment with an inner ring (13b) of the bearing (13) and another end in abutment with the clutch member (12).

11. The disconnect module (10) according to claim 9 or 10, wherein the return assembly (14) is a disc spring.

12. The disconnect module (10) according to claim 1, wherein the disconnect module (10) comprises an electromagnetic actuator (15) comprising an armature (15a), the armature being able to apply an axial action force to the clutch member (12) to cause the clutch member (12) to engage with the drive member (11).

13. The disconnect module (10) according to claim 12, wherein the disconnect module (10) comprises a second snap ring (17), located on a side of the electromagnetic actuator (15) that is remote from the clutch member (12) and configured to stop the electromagnetic actuator (15) in the axial direction.

14. The disconnect module (10) according to claim 1, wherein the first component (20) is an idler gear in a speed reducer, and the drive member (11) is fixedly connected to an end surface of the idler gear.

15. A power transmission system for a vehicle, the power transmission system comprising:
a motor having a drive shaft;
a speed reducer having at least one transmission shaft; and
the disconnect module (10) according to one of claims 1 to 14, wherein the first shaft (30) comprises the drive shaft or the at least one transmission shaft.
